# EUROPEAN PATENT APPLICATION

(11) **EP 2 226 902 A2**
(43) Date of publication of application: **08.09.2010**
(21) Application number: 10155840.1
(22) Date of filing: 08.03.2010
(51) Int. Cl.: H01R 13/24, H01R 13/639, H01R 13/64, H01R 12/22

(54) **In-flight entertainment system connector**

(30) Priority: 06.03.2009 US 157952 P; 02.10.2009 US 247991 P
(71) Applicant: Phitek Systems Limited, Newmarket, Auckland 1023 (NZ)
(72) Inventor: GREIG, Nigel, 1022 Auckland (NZ); DONALDSON, Mark, 1030 Lausanne (CH); MOODY, Roy, 1023 Auckland (NZ); SIMMONDS, Paul, 1023 Auckland (NZ); CLARKE, Elaine, 1023 Auckland (NZ)
(74) Representative: Ahmad, Sheikh Shakeel

(57) **Abstract**

An In-flight Entertainment (IFE) system connector assembly has a connector module receiver (10) for provision in a seat (6). The receiver (10) includes a number of pockets (16) in which connector modules (12) can be docked. Each connector module (12) provides a required connector type for a device to be connected to the IFE. Modules can be replaced if different connector types are required to be supported.

## Description

### Field of the Invention

The present invention relates to aircraft passenger communication and entertainment systems, such as in-flight entertainment ("IFE") systems. The invention has particular relevance to a connector or connection system for allowing component devices such as displays, headphones, personal computing and media player devices to be connected to, or used in conjunction with, IFE systems.

### Background of the Invention

In-flight entertainment ("IFE") systems are now commonplace on commercial passenger aircraft. Generally, aircraft manufacturers manufacture aircraft for a "wholesale" market which allows the airlines to make additions and changes to the aircraft fit-out to the customers' requirements.

As technology changes, particularly advances in communications technologies, in-flight entertainment systems need to be upgraded to satisfy passenger requirements. Increasingly, aircraft passengers wish to interconnect their own component devices such as communication or data processing devices to aircraft systems, even if it is only to obtain a suitable power supply for a passenger device such as a personal media player or laptop. This particular demand can vary between customers and can include data connections such as USB, headphone, earphone, media player, laptop, and wireless devices, among others. This requirement for various types of connector, or even new connector configurations, is likely to be an ongoing issue with upgrades to IFE systems as new connectors and communication protocols evolve.

An aircraft fit-out is expensive, so a new fit-out may not be performed for several years. In that time, customer requirements for connectivity to IFE systems is likely to have changed significantly.

Apart from connector types, there is also the matter of replacement of worn or damaged connectors. If a seat connector, for example, is faulty then it is important to be able to replace it simply and quickly to avoid flight delays.

### Objects of the Invention

It is an object of the invention to provide a new IFE connector system or configuration which will at least go some way to overcoming disadvantages of existing systems, or which will at least provide a useful alternative to existing systems.

Further objects of the invention will become apparent from the following description.

### Summary of the Invention

In one aspect the disclosed subject matter provides an IFE system connector comprising a connector module receiver having an IFE connector to connect the receiver to an IFE system, and one or more connector regions, at least one connector region being adapted to receive a removable connector module whereby the connector module provides a required connector type for a device to be connected to the IFE.

In another aspect the disclosed subject matter provides an IFE system connector assembly including a connector module receiver and one or more connector modules, each connector module being selectively removable from the connector module receiver.

In a preferred embodiment the or each connector module provides a required connector type.

In another aspect the disclosed subject matter provides an IFE system connector comprising a connector module for provision in a connector module receiver, the connector module having a component interface to provide a required connector type for connection with a component device, and a receiver interface for connection with the connector module receiver.

In some embodiments each connector module provides one or more component interfaces such as sockets to receive plug connectors of components. The components may be accessories used by passengers for example, or components of the IFE system such as a visual display unit.

In some embodiments the or each connector module includes a receiver interface.

In some embodiments the connector module receiver receives a plurality of individually removable connector modules.

In other embodiments the connector module receiver receives a single connector module. In these embodiments the connector module may include a plurality of connector types. In still further embodiments the connector module may include a plurality of removable units such as sockets.

In some embodiments the connector module receiver includes a recogniser to recognise the connector type for the or each module, and thereby allow devices connected to the one or more connector modules to communicate with the IFE system. In some embodiments the connector module receiver allows multiple devices to communicate with the IFE system over a single communication path between the connector module receiver and the IFE system. In other embodiments multiple communication paths are provided between the connector module receiver and the IFE system.

In a further aspect the disclosed subject matter provides a passenger seat including an IFE connector comprising a connector module receiver and one or more connector modules, each connector module being selectively removable from the connector module receiver.

In some embodiments the component interface may comprise an emitter. In other embodiments the component interface may comprise a socket or plug.

In some embodiments the receiver interface may include one or more physical electric connections. Electrical connections may be an arrangement or layout which is dependent upon the type of component interface in the component module this supports.

In some embodiments the receiver interface comprises an electrically detectable property of the component module which is dependent upon the component interface that the module provides. Such an electrically detectable property may comprise an arrangement of passive components, interconnections between electrical contacts or arrangements of active components or data such as an identifier which can be read by, or delivered to a recogniser associated with the connector module receiver. The receiver interface may include a physical property of the module, the property being dependent on the connector type supported by the module.

In some embodiments, the connector recogniser recognises the component interface that the connector module is intended to provide by detecting a property of the receiver interface. In some embodiments the property may comprise of physical property of the receiver interface, and in other embodiments the property may comprise an electrical or "soft" property of the receiver interface. In other embodiments the property may comprise physical aspects and electrical aspects of the receiver interface.

In some embodiments the connector module receiver includes a lock to secure each connector module to the receiver. Furthermore, the connector module and receiver may include complementary formations on contacting surfaces so as to provide a taper fit between each connector module and the receiver.

In some embodiments the receiver includes a faceplate, and the faceplate is adapted to locate on the receiver when each connector module receiver is locked in place.

In another aspect the disclosed subject matter provides a method of connecting a component device to an IFE system, the method comprising the steps of:
providing a connector module receiver and one or more connector modules, at least one connector module being selectively removable from the connector module receiver,
docking a connector module in the connector module receiver, and
using the connector module to communicate with the IFE system to thereby connect the component device to the IFE system.

The disclosed subject matter also provides connector apparatus or connection of methods which may broadly be said to consist in the parts, elements and features referred to or indicated in this specification, individually or collectively, in any or all combinations of two or more of those parts, elements or features. Where specific integers are mentioned in this specification which have known equivalents in the art to which the invention relates, such known equivalents are deemed to be incorporated in the specification.

Further aspects of this invention which should be considered in all its novel aspects will become apparent from the following description given by way of example of a possible embodiment thereof.

### Drawing Description

One or more embodiments of the invention will be disclosed below with reference to the accompanying drawings in which
- Figure 1:: is a diagrammatic side elevation of an existing or known IFE connector configuration;
- Figure 2:: is a diagrammatic side elevation of one embodiment of a new IFE connector configuration;
- Figure 2A:: is a diagrammatic illustration of a connector module separated from a connector module receiver;
- Figure 3:: is an isometric view from above of a connector module receiver including three connector modules;
- Figure 4:: is an isometric view from below of the assembly of Figure 3;
- Figure 5:: is a further isometric view from below of the assembly of Figure 3, but now showing the other end of the assembly;
- Figure 6:: is an isometric view from above of the assembly of Figure 3, but with two of the connector modules removed from the receiver;
- Figure 7:: is a further isometric view from above of the assembly of Figure 3 with two of the connector modules removed from the receiver, and showing further detail inside the pockets of the receiver that receive the connector modules;
- Figure 8:: is a further isometric view of Figure 7 from another angle;
- Figure 9:: is a further isometric view from above of the assembly of Figure 3, showing the upper surfaces of the connector modules and the receiver in greater detail;
- Figure 10:: is an isometric view from above of a connector module;
- Figure 11:: is an isometric view of a connector module from below;
- Figure 12:: is a plan view of a connector module from above;
- Figure 13:: is a plan view of a connector module from below;
- Figure 14:: is a side elevation of a connector module;
- Figure 15:: is a side elevation of a connector module (other side);
- Figure 16:: is an end elevation of a connector module;

- Figure 17:: is an end elevation of a connector module (other end);
- Figure 18:: is a perspective view of a locking member;
- Figure 19:: is a side elevation and end elevation of the locking member of Figure 18;
- Figure 20:: Is an end elevation (other end) and side elevation (other side) of the locking member of Figure 18;
- Figure 21:: is an isometric view from below of a faceplate for use with the assembly of Figure 3.

### Detailed Description of Embodiments Shown in the Drawings

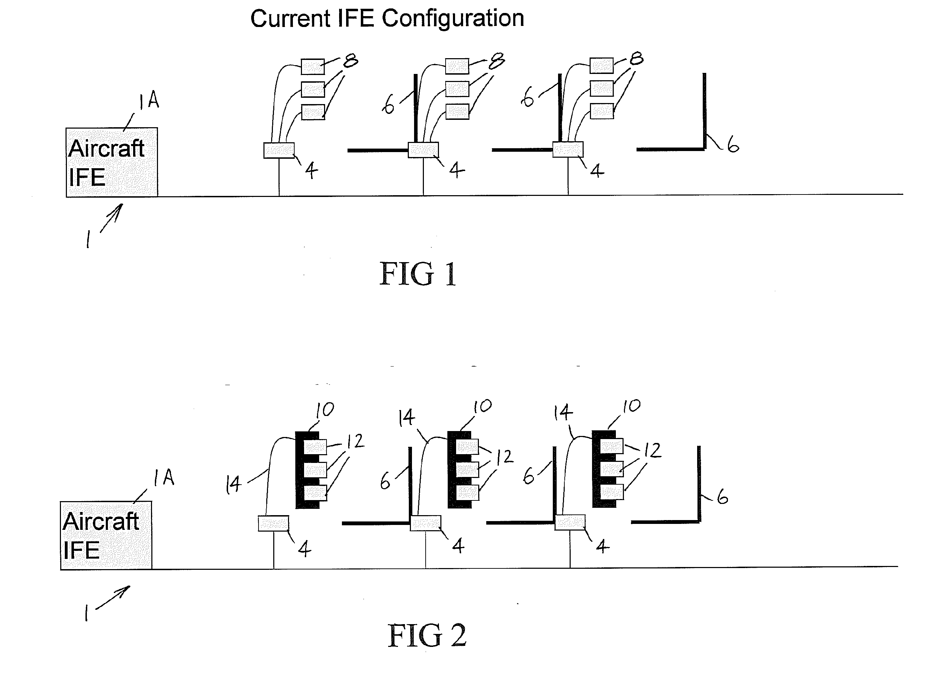

Referring to Figure 1, a known IFE connector configuration is shown. The IFE system includes apparatus generally referenced 1 which comprises a central processor or server 1A. Server 1A delivers media over cabling 2 to one or more seat distribution units 4 associated with one or more seats 6.

Each seat distribution unit 4 delivers the entertainment media to devices present in\on or I the vicinity of, each seat to make the media available to the user. The devices typically include a visual display unit such as an LCD screen (not shown) and a number of connection sockets 8 which are mounted on or adjacent to each seat. The sockets 8 may include a variety of connector types. For example, one connector type may comprise a USB socket into which a user may plug a USB plug for connection to a laptop, a personal digital assistant, a mobile telephone or MP3 player, for example. Another connector type may be a power socket to enable a user to use or re-charge a laptop. Yet another connector type may be one which is not used for a user peripheral device, but is instead a socket for use by a component or device which remains in the aircraft, for example the LCD monitor which is commonly attached to the seat back. Yet another common use for a connector 8 is a headphone socket, particularly a noise cancellation socket.

As outlined above in this document, with such a wide variety of possible connector types which may be required by various passengers, there is a difficulty with specifying the connector types that are required, and for upgrading these over time. For example, there can be a considerable time lag between placing an order for an aircraft and the time at which the aircraft is ready for passenger service. Over that time, a connector type being specified at the manufacture stage by an airline may have become redundant, or there may be increased demand for another type of connector arrangement. It can be difficult to accommodate these changes. Furthermore, after an aircraft has been in service for some time, the connector type required by passengers may well have changed. Physically removing and replacing the connector arrangements in each seat is a very expensive and time-consuming exercise, particularly since the cosmetic appearance of the seat fit-out and safety are important factors.

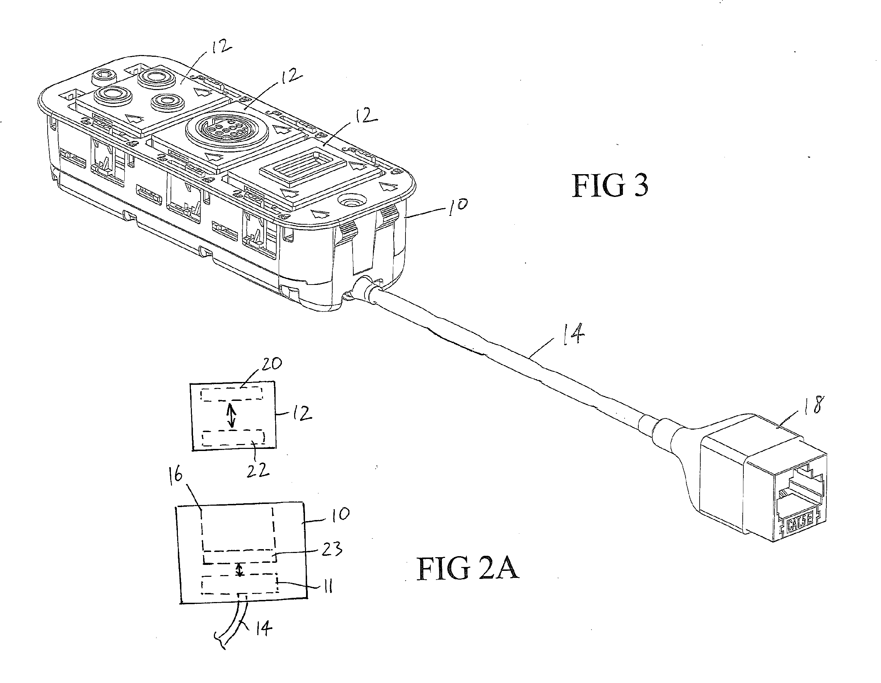

Turning now to Figure 2, a schematic for a new connector arrangement is shown. In Figure 2, and the remainder of the drawing Figures, like reference numerals refer to like features.

In the system shown in Figure 2, a connector module receiver 10 is provided in the form of a seat-located connector socket. The receiver 10 carries one or more selectively removable connector modules 12. As can be seen from Figure 2, in this embodiment there is a single standard data connection or harness 14 between the seat distribution unit 4 and the socket or sockets, unlike the known arrangement of Figure 1, in which a plurality of individual connections are required between seat distribution unit 4 and each of the sockets 8. In this embodiment the standard data connection 14 may include a single data communication path and an appropriate power supply cable. However, those skilled in the art will appreciate that the connector system according to the invention may in other embodiments be provided with a multiple connection 5 between receiver 10 and the IFE system, for example an analog connection and a separate digital connection.

Turning to Figure 2A, one of the connector modules 12 and the receiver 10 are shown diagramatically. As will be described further below, in one embodiment the module 12 generally includes a component interface 20 and a receiver interface 22. The receiver 10 generally includes one or more receiving regions such as one or more pockets 16, a module interface 23 to connect with receiver interface 22 of the module, and may include a recogniser 11 if necessary. The recogniser may be embodied in software or in appropriate circuitry and may include a processor, as discussed further below. Those skilled in the art to which the invention relates will appreciate that the recogniser and/or processor does not need to be physically located in the receiver 10.

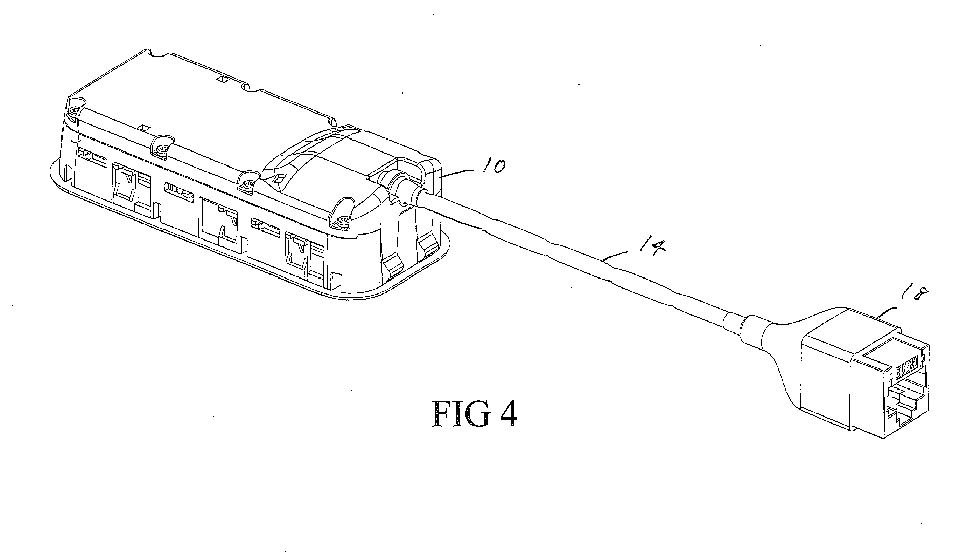

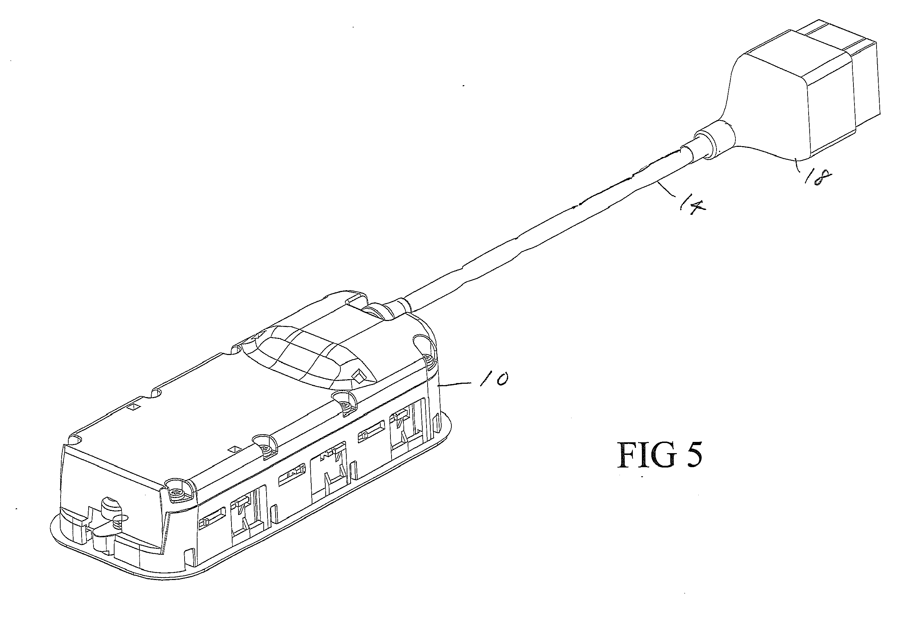

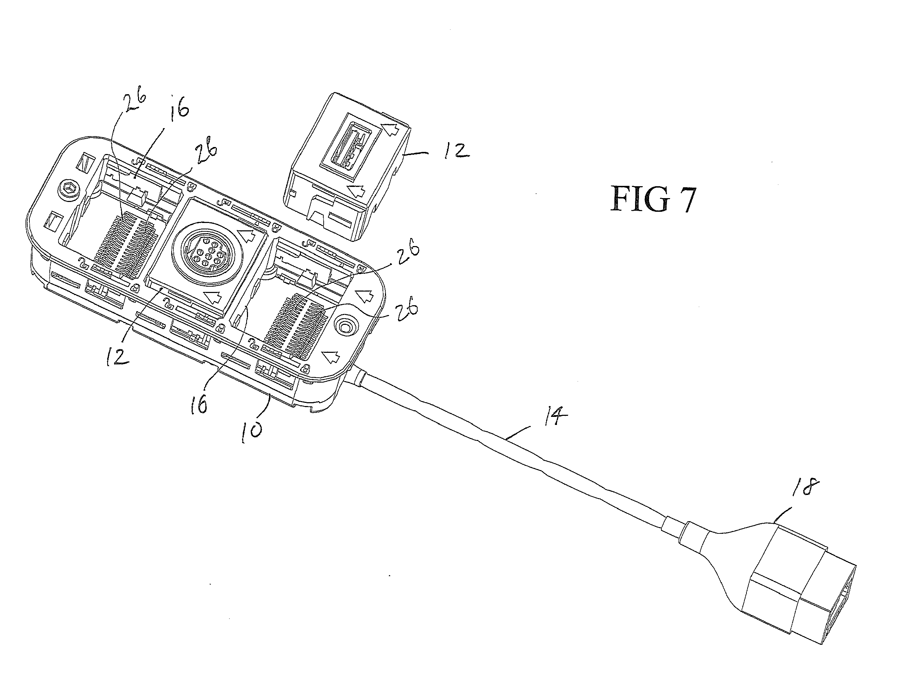

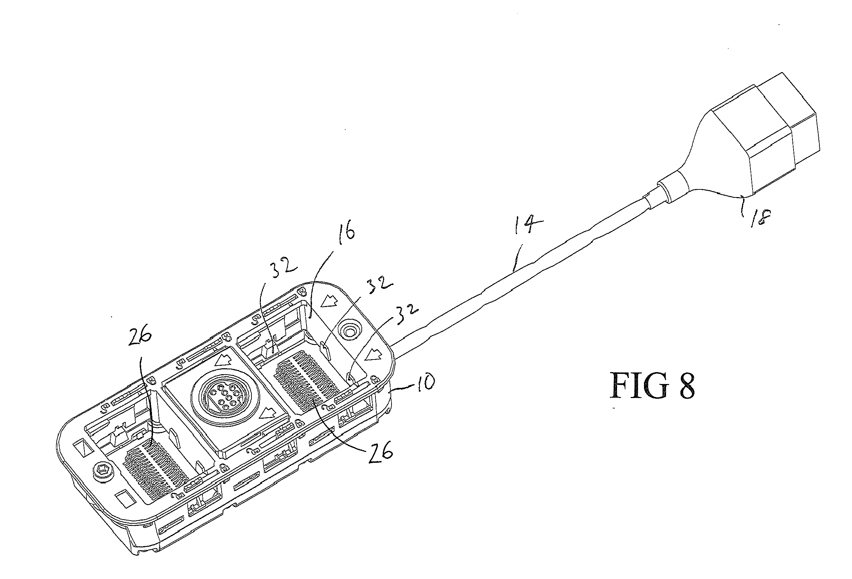

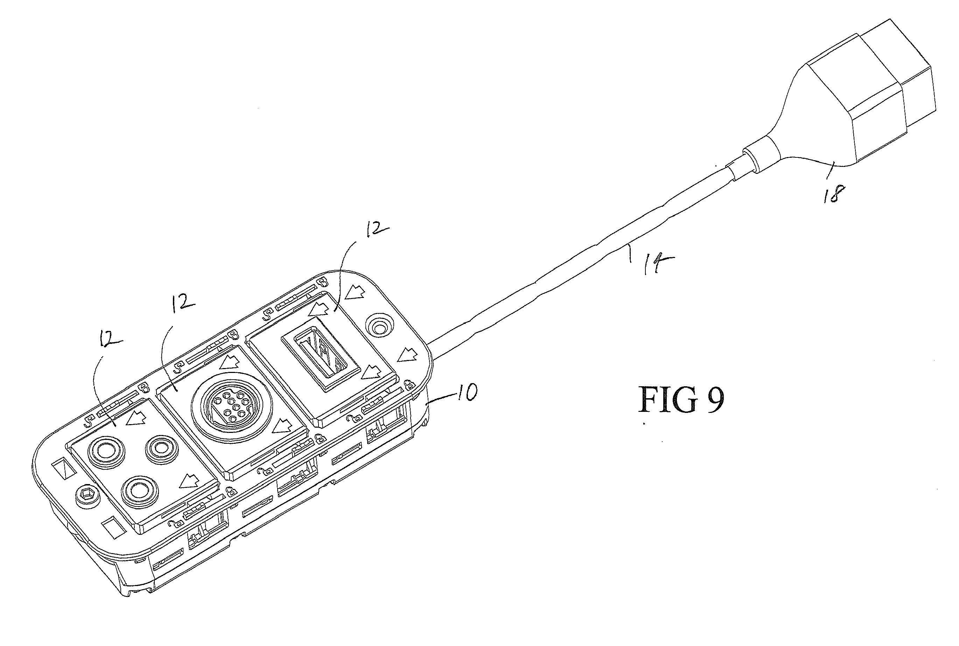

Turning to Figures 3 to 9, an embodiment of the connector module receiver 10 and connector modules 12 are shown in more detail. As can be seen from those figures, the connector module receiver 10 includes a number of pockets 16 in which the connector modules 12 may be located. The module interface 23 in this embodiment consists of electrical contacts 26. Also illustrated is the communication cable 14 from the receiver 10 which terminates with an appropriate connector 18 for connection with the IFE system via seat distribution unit 4 for example.

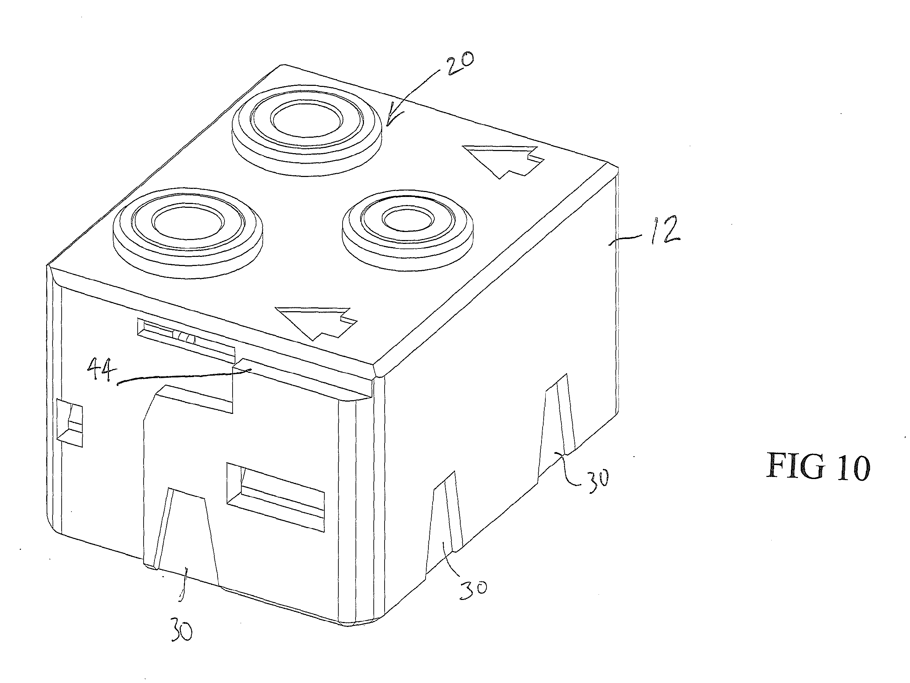

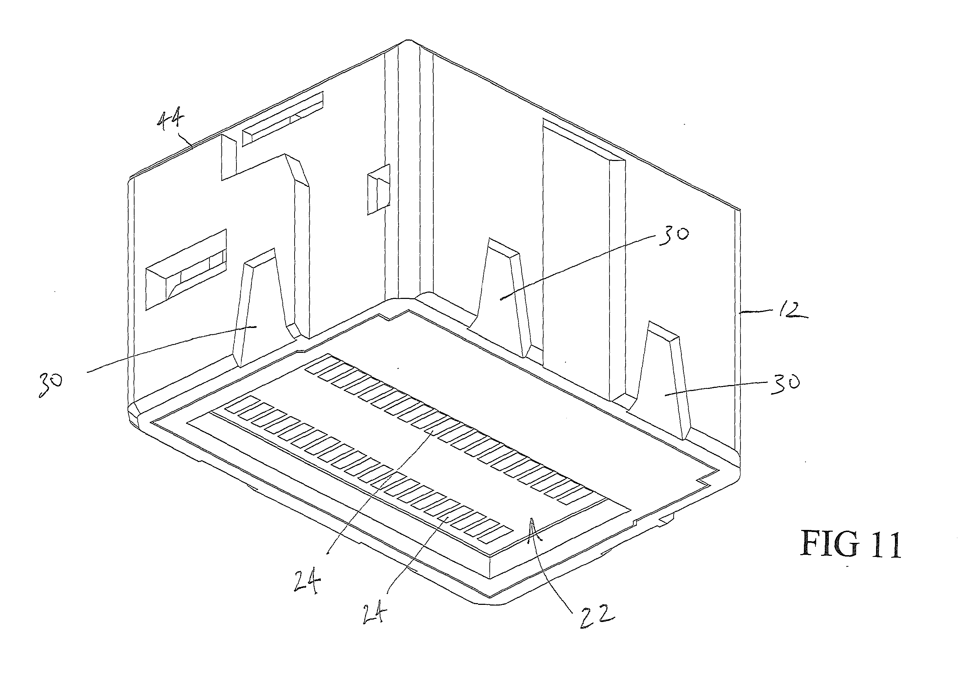

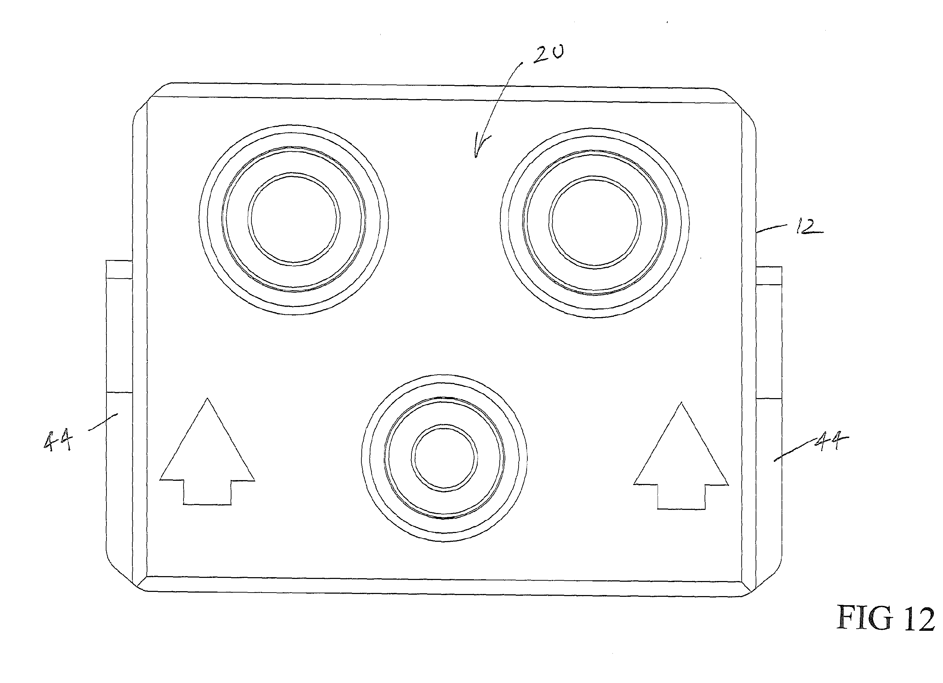

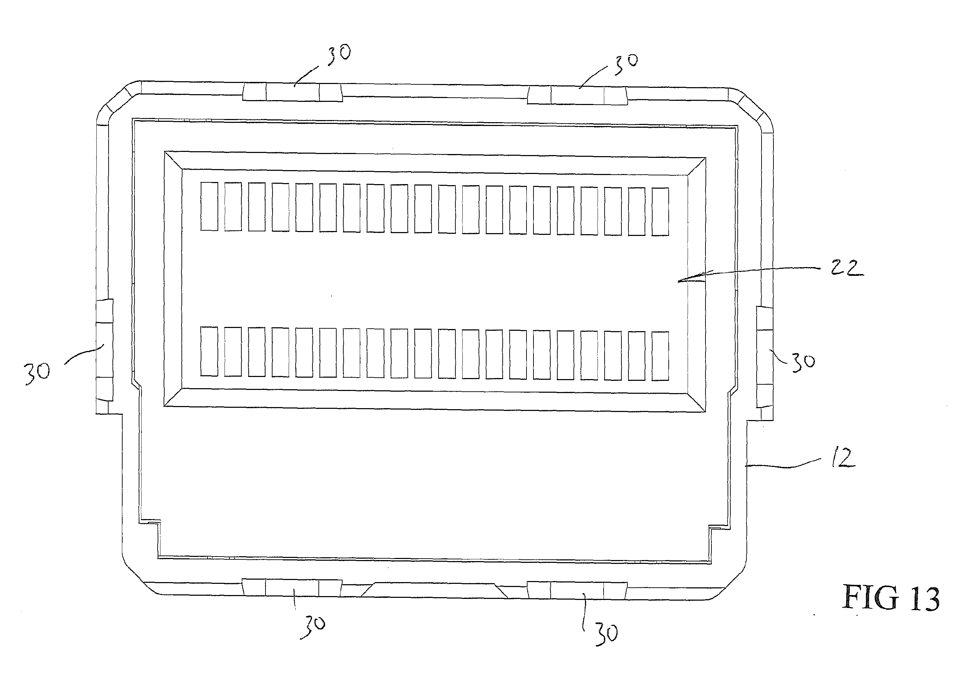

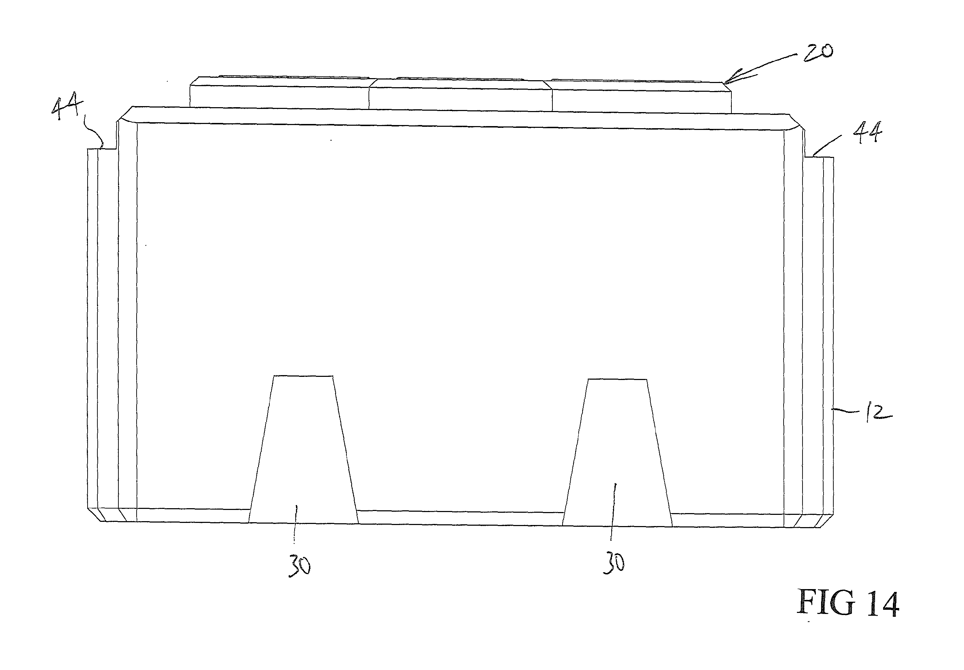

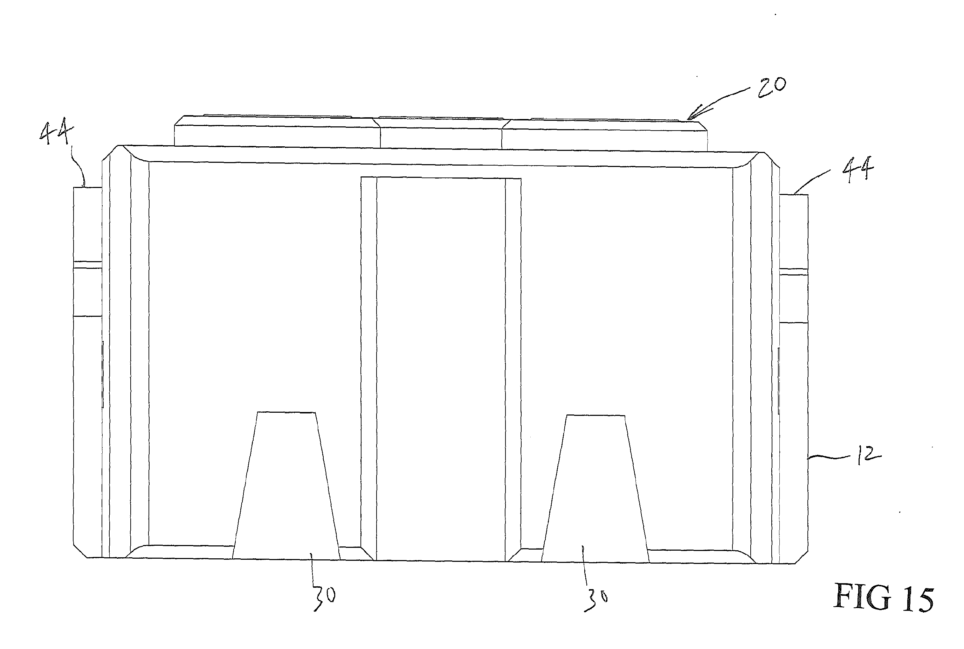

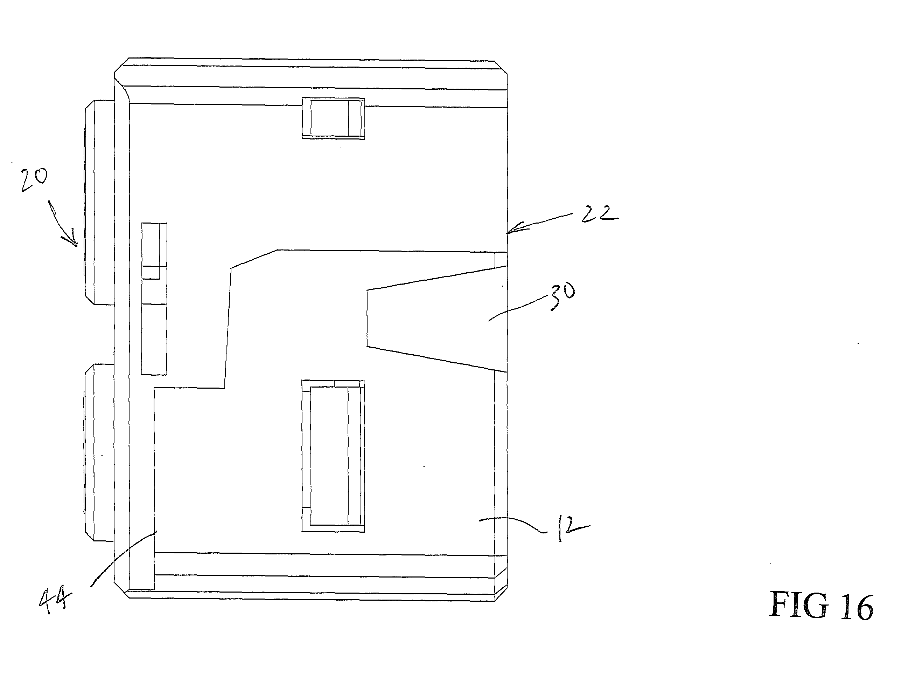

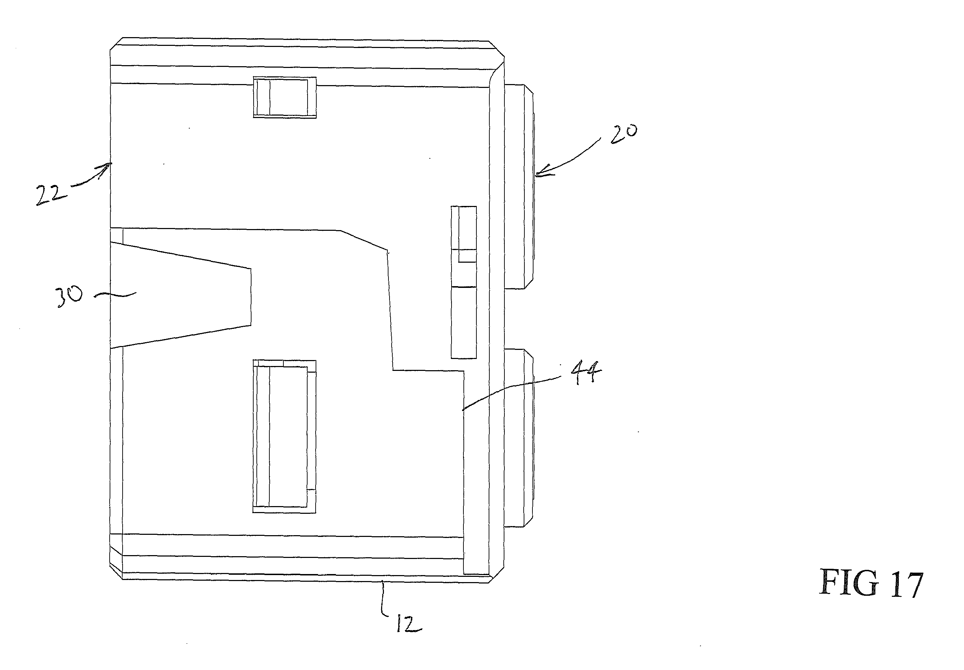

Referring now to Figures 10 to 17, an embodiment of connector module 12 is shown in greater detail. Referring to those Figures, the module 12 includes a component interface, generally referenced 20 and a receiver interface generally referenced 22.

As can be seen from Figures 3 to 9, the component interface 20 may take a number of different forms, depending upon the connector type which connector module 12 is required to implement. In the example shown in Figures 10 to 17, interface 20 comprises a three pin socket for receiving a three pin plug such as a noise cancellation headphone plug, for example. Apart from receiving a plug, the interface 20 would in some embodiments itself comprise a plug if necessary, and, rather than providing a physical connection, may comprise an emitter for example an infrared, Wi-Fi or Bluetooth emitter device for interfacing with a component that supports an infrared, Wi-Fi or Bluetooth communication connection. Without limitation, the interface 20 may implement any consumer or aircraft connector or emitter type such as, but not limited to, MiniDin, ARINC Standards, USB, HDMI, Infrared, Wi-Fi, Bluetooth, RJ45 amongst others.

Those skilled in the art will appreciate that the interface 20 will depend on the connector type that the particular module 12 is required to implement. Therefore, each connector module 12 requires a particular electrical communication when received by or docked into the receiver 10, depending on the connector type it is required to implement.

The receiver interface 22 may, in the embodiment illustrated, consist of electrical contacts 24. In use, these make contact with corresponding or complementary electrical contacts 26 located in the base of each of the pockets 16 in the receiver 10.

In one embodiment, each module includes internal circuitry, or software, to enable the required data type to be supplied to the receiver 10.

In another embodiment, each connector module has a property which allows the connector type to be recognised by the receiver 10. In one embodiment, the recognition may be achieved by the arrangement of electrical connectors on interface 22, or simply by which of the connectors on interface 22 make an electrical connection with a component to which the relevant connector module 12 is connected via interface 20. Alternatively, the interface 22 or module 12 may have a physical property such as a contour which opens or closes a switch, for example at a particular location on the receiver 10 and which is in turn used by the recogniser to recognise the connector type supported by the module.

However, if a broad range of connector types are to be supported, then the arrangement can be complex as the recognition needs to determine parameters such as data types, power and other electrical communication and how that is conducted to each connector module once that module is docked or located into the receiver 10. Therefore, in various embodiments of the invention, recognition may occur in one or more of the following ways:
a. Providing the interface 22 of each connector module with a selected arrangement, or pattern of electrical connectors for engagement with the receiver connector arrays 26 of the module interface. Therefore, for example some electrical contacts may be missing so that it is only the electrical contacts that are relevant to the particular component interface 20 that is supported by the module that are active.
b. "Soft" identification. In this embodiment, recogniser 11 detects the presence of the connector module 12 and determines the type of interface 20 that the module supports by determining a property of the connector module electrically. In one embodiment this may occur by having a number of contacts in the connector array 24 at the base of each module used solely for identification purposes. Thus passive components in the module may be connected to the identification contacts to provide detectable predetermined properties, each property signifying a particular connector type. As another example, an embodiment may include a memory which can be accessed by the recogniser 11 to obtain information on the connector type and which may additionally include a unique identifier relating to that module, or other identifier, by which the authenticity of the module may be verified. Once the recogniser in the device 10 recognises the connector type, then the recogniser, or additional circuitry in or associated with the receiver 10 (for example a microprocessor) soft switches appropriate data types to the module 12 and performs any required processing to decode or implement the data type.
c. A further option is a combination of options a, and b, above. In this embodiment, each connector module may have electrical contacts that are determined by the connector type, customised to a particular connector type, and also include an electrical identifier, such a unique identifier. In this embodiment, some of the conduction parts are soft switched by the device 10 while others may simply be determined by the physical electrical contact arrangement between the device and the module 12.

In one embodiment, the connector module receiver contains or is associated with software updatable digital decoding, encoding and encryption functionality to enable a wide range of connector types and to allow for new connector types to be electrically enabled by an IFE system. This digital functionality is designed to accept multiplexed encoded data streams from the IFE which simplifies the IFE cabling architecture. The digital functionality therefore allows for change in data streams as consumer audio product connectivity and associated data flows change. Furthermore, the digital functionality provides support data switching and data type encoding and encryption in a suitable format for assorted connector types.

Therefore, the digital functionality in or associated with the connector module receiver separates and switches conventional digital data streams, specialised encryption digital data streams, and analogue signal streams to the appropriate connector from one or more multiplex encoded inputs. This functionality may be proivded as part of, or separately from, the recognition function of recogniser 11.

Referring to Figures 10 to 17 it can be seen that in the embodiment illustrated the side and end walls of each module 12 include a tapered recess 30. Those skilled in the art will appreciate that not all walls need to include a tapered recess, and alternatively, the recess may instead comprise a projection having one or more tapered walls. The recesses 30 are complemented in receiver 10 by corresponding tapered projections 32. As can be seen from the drawings, the tapers allow a taper fit to be achieved between each of the connector modules and the receiver. In this way, each connector module is guided into the receiver, and the taper fit ensures a secure engagement so that there is no relative movement between the modules and the receiver in use (which overcomes problems due to vibration in an aircraft environment).

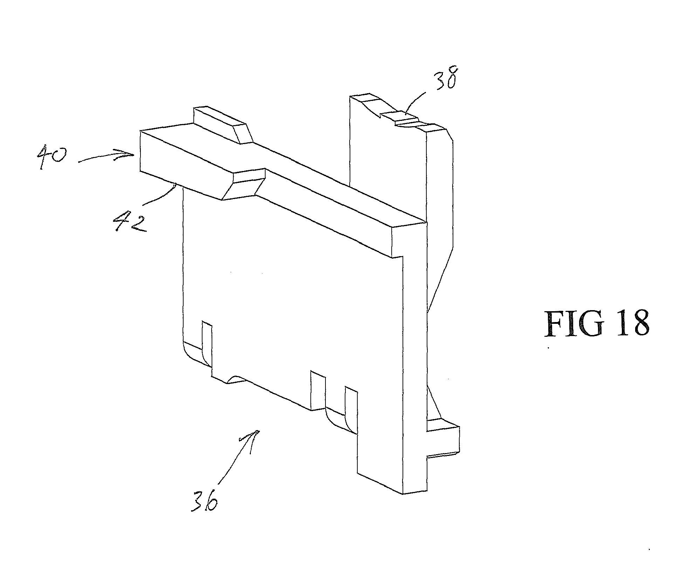

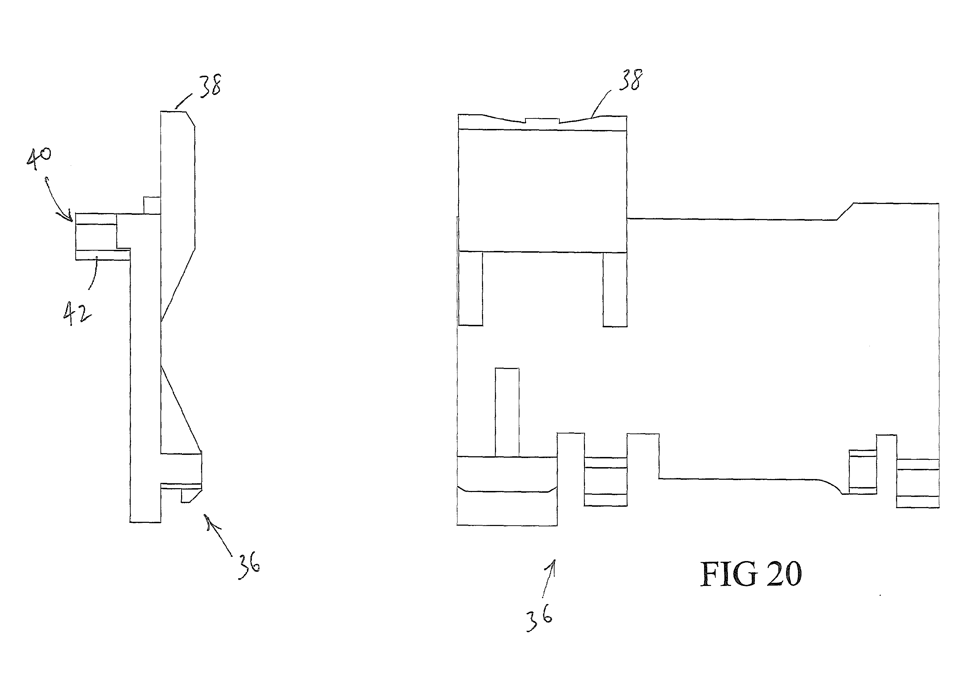

Referring now to Figures 18 to 20, a locking component generally referenced 36 is shown having a user contact portion 38 and a retaining portion 40 which has a contoured contact wall 42 for engaging with a surface 44 on the side of each module 12.

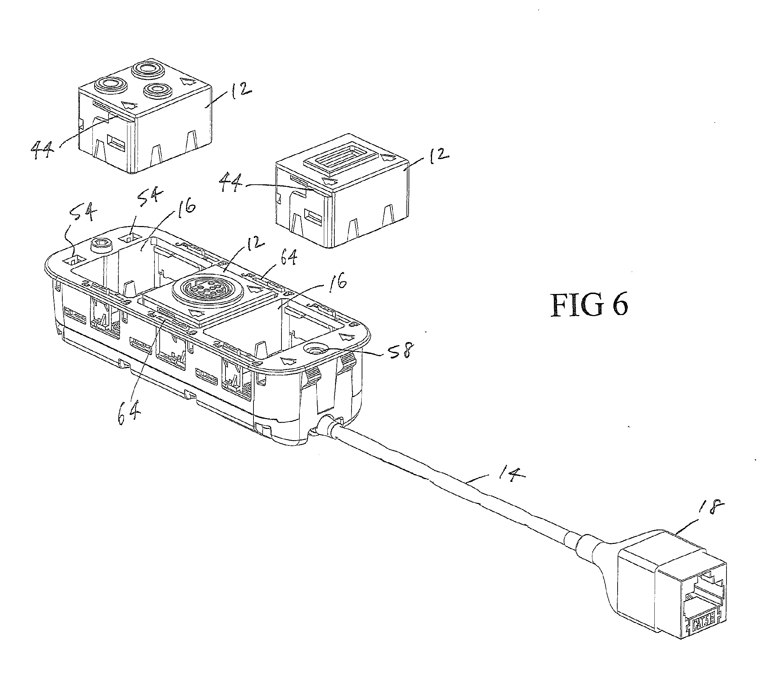

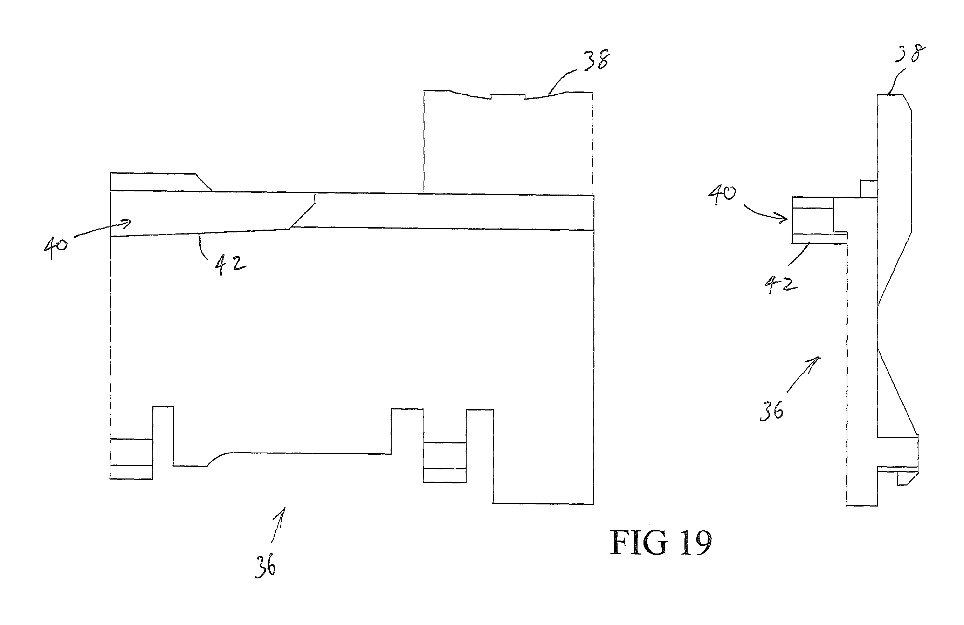

In one embodiment, a locking member 36 is provided in the receiver 10 on each side of the connector module packet 16, as can be seen in Figures 3 to 9. Referring particularly to Figures 6 to 8 it can be seen that the locking members 36 are slidably disposed in the receiver 10. Still referring to Figures 6 to 8, it can be seen that the locking members 36 that are positioned in the first and last pockets 16 of the receiver 10 are in the unlocked position so that modules 12 may be positioned in each of the pockets. When a connector module 12 is placed in a pocket 16, then the user can manipulate contact portion 38, using a finger or fingernail for example, to drag the locking member in a slideable motion in a direction toward the data cable 14 which will draw surface 42 over surface 44. As can be seen from Figure 19, surface 42 is contoured, and this embodiment comprises an inclined plane or ramp, so that the member is activated by moving it toward a locked position, the module 12 is brought into a firm and secure engagement with the receiver 10. Those skilled in the art will appreciate that other forms of surface 42 may be used apart from a simple inclined plane or ramp. For example, a curved, cam-like surface may be used. Similarly, surface 44 may be contoured as an alternative to contouring surface 42.

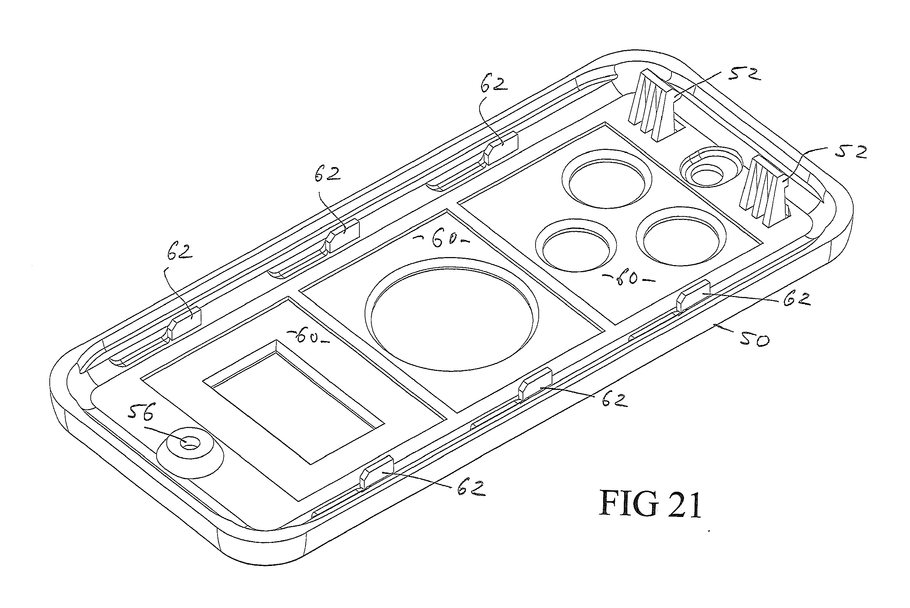

Turning now to Figure 21, a faceplate or fascia is shown for placement over the receiver 10. The faceplate 50 in this embodiment includes legs 52 which engage with apertures 54 in the receiver 10, and together with an appropriate fastener (not shown) which may be located through apertures 56 and 58, allows the faceplate 50 to be attached to the receiver. Faceplate 50 may include cutouts or windows 60 that correspond to the physical form of the component interfaces 20 provided by the connector modules. The window 60 may be removable or replaceable depending upon the type of connector module 12 which is to be used, and in some embodiments of the invention, windows 60 may simply be openings. Faceplate 50 also includes a further locking mechanism comprising projections 62 which in use are received in the recesses 64 in the receiver 10 that are created when the locking member 36 is disposed in the locked position. Therefore, the faceplate 50 cannot be properly located in place on the receiver 10 until all of the locked members are correctly actuated. Furthermore, once the faceplate is correctly in place, the locking members cannot be inadvertently moved to an unlocked position, for example due to vibration in use.

Although a plurality of individual selectively removable connector modules 12 are shown, it will be appreciated that a single selectively removable component which engages with connector module receiver 10 may be provided with a plurality of different component connector. Therefore, in an alternative arrangement, a group of component interfaces of the same or different connector type may be removed and replaced as a single module.

The connector module receiver 10 is adapted for placement in or adjacent to an aircraft seat, for example in a seat back or in a seat armrest. In one embodiment, the faceplate 50 allows cosmetics to be customised or changed easily and the component modules 12 may also include customised fascias so that the cosmetic appearance of the connector assembly is pleasing and consistent. Furthermore, blanks may be provided, should the airline opt not to include a full range of connectors in each receiver 10.

In one embodiment the receiver 10 includes appropriate hardware and software to allow the required connector type to communicate with the seat distribution unit 4 (or the IFE system) over the standardised harness 14. Therefore, in one embodiment, the seat connector socket 10 has the ability to allow devices connected to sockets 12 to communicate into the IFE system. Therefore it may contain the following functionality:
compression/decompression
routing of data, video, audio
audio/video enhancement or customisation
active noise cancellation functionality
detection of socket type functionality
authentication capabilities.

Similarly, in one embodiment, the receiver 10 conforms to standardised seat cutout and a standardised mounting distance which enables faceplate options for multiple colours and styles, without having to change the seat or arm rest recess in which it is located.

In other embodiments the IFE system includes functionality to enable communication with devices connected to connectors 12.

It will be seen from the foregoing that a connection system is provided which enables connector types to be replaced or changed simply and conveniently and allows a simple connection arrangement to be achieved between components and the seat distribution unit of an IFE system.

Where in the foregoing description, reference has been made to specific components or integers of the invention having known equivalents then such equivalents are herein incorporated as if individually set forth.

Although this invention has been described by way of example and with reference to possible embodiments thereof, it is to be understood that modifications or improvements may be made thereto without departing from the scope or spirit of the invention as defined in the appended claims.

## Claims

1. An IFE system connector comprising a connector module receiver having an IFE connector to connect the receiver to an IFE system, and one or more connector regions, at least one connector region being adapted to receive a removable connector module whereby the connector module provides a required connector type for a device to be connected to the IFE.

2. An IFE system connector as claimed in claim 1 wherein the connector module receiver is associated with a recogniser to recognise the connector type of the or each connector module.

3. An IFE system connector as claimed in claim 1 wherein the connector module receiver is associated with a processor to process data received from a connector module to provide a required data type to the IFE system to support the connector type.

4. An IFE system connector as claimed in claim 1 wherein at least one of the connector regions includes a formation such that the connector module is located in the required position or orientation relative to the connector module receiver.

5. An IFE system connector as claimed in any one of the preceding claims wherein the connector module receiver includes a lock to secure each connector module to the receiver.

6. An IFE system connector comprising a connector module for provision in a connector module receiver, the connector module having a component interface to provide a required connector type for connection with a component device, and a receiver interface for connection with the connector module receiver.

7. An IFE connector as claimed in claim 6 wherein the connector module provides a plurality of component interfaces for transmitting or receiving data to or from component devices used by users of the IFE system.

8. An IFE system connector as claimed in claim 6 wherein the component interface comprises an emitter.

9. An IFE system connector as claimed in claim 6 wherein the component interface comprises a socket or plug.

10. An IFE system connector as claimed in claim 6 wherein the receiver interface includes one or more physical or electrical contacts.

11. An IFE system connector as claimed in claim 6 wherein the receiver interface comprises an electrically detectable property of the or each component module, the detectable property being dependent upon the component interface that the module provides.

12. An IFE system connector as claimed in claim 11 wherein the electrical detectable property comprises one or more of:
- a property detectable from an arrangement of passive components;
- a property detectable from an arrangement of active components;
- connection with electrical contacts of the receiver interface;
- data comprising an identifier.

13. An IFE system connector as claimed in claim 6 wherein the connector module includes a processor to process data received from a component device to provide a required data type to the IFE system to support the connector type.

14. An IFE system connector assembly as claimed in claim 6 wherein the connector module includes a formation on an outer surface such that the connector module is located in the required position or orientation relative to the connector module receiver.

15. A method of connecting a component device to an IFE system, the method comprising the steps of:
providing a connector module receiver and one or more connector modules, at least one connector module being selectively removable from the connector module receiver,
docking a connector module in the connector module receiver, and
using the connector module to communicate with the IFE system to thereby connect the component device to the IFE system.
